# EUROPEAN PATENT APPLICATION

(11) **EP 4 624 988 A1**
(43) Date of publication of application: **01.10.2025**
(21) Application number: 23894885.5
(22) Date of filing: 08.11.2023
(51) Int. Cl.: G01S 7/497, G01S 7/481, G02B 7/182

(54) **LIDAR CORRECTION DEVICE AND METHOD**

(30) Priority: 21.11.2022 KR 20220156426; 21.11.2022 KR 20220156427
(71) Applicant: LG INNOTEK CO. LTD, Gangseo-gu Seoul 07796 (KR)
(72) Inventor: PARK, Sang Hyung, Seoul 07796 (KR); LEE, Ho Jung, Seoul 07796 (KR); KIM, Min Kyu, Seoul 07796 (KR); KIM, Seon Yung, Seoul 07796 (KR)
(74) Representative: Plasseraud IP
(86) International application number: PCT/KR2023/017858
(87) International publication number: WO 2024/111956

(57) **Abstract**

Disclosed in an embodiment is a LiDAR correction device comprising: a first reflection unit for reflecting an optical signal emitted by an output unit of the LiDAR device; a second reflection unit for reflecting the optical signal reflected from the first reflection unit; and a moving unit connected to the first reflection unit and the second reflection unit, wherein the moving unit moves the first reflection unit and the second reflection unit in a first direction in which the optical signal is emitted or in a second direction that is vertical with respect to the first direction.

## Description

### [Technical Field]

Embodiments relate to a LiDAR correction device and method. Specifically, the embodiments relate to a method of reducing a correctable minimum distance of a LiDAR device using a reflection unit and a diffusion unit.

### [Background Art]

Light detection and ranging (LiDAR) systems are being applied to various fields, such as aerospace, geology, 3D maps, vehicles, robots, drones, etc.

In general, a distance measurement system of a LiDAR scans a space while rotating a two-dimensional distance sensor for scanning a flat surface in the center of which the sensor is located. A device to which a two-dimensional photodiode array is applied measures a distance using structure light or a time of flight (ToF).

A ToF measurement method measures a time difference or phase difference and converts the measured time difference or phase difference into a distance, and a structure light measurement method calculates a depth by projecting a unique pattern and detecting a corresponding point. For example, a LiDAR device can transmit light toward a target, receive the light through a sensor, and measure a ToF using a high-speed electrical circuit. In addition, the LiDAR device can calculate a distance to the target from the ToF and generate a depth image of the target using the calculated distance for each location of the target.

Before the distance measurement of the LiDAR device is performed, there is a need for a process of correcting a distance of a LiDAR device using a LiDAR correction device. The LiDAR correction device compares a distance measurement result of the LiDAR device with an actual distance and checks a difference therebetween.

However, in the case of correcting a LiDAR distance, a correctable minimum distance is also determined according to a measurable minimum distance of the LiDAR device. Accordingly, in general, in the case of a long-distance LiDAR device, a minimum distance is determined at tens of meters (m) when correcting a distance, and in this case, a space required for distance correction can also be tens of meters (m). Accordingly, to correct the LiDAR device, a space equivalent to a measurable distance is required. Accordingly, there is a problem in that a very large space is required to correct the LiDAR device.

### [Detailed Description of Invention]

### [Technical Problem]

Embodiments of the present invention are directed to providing a LiDAR distance correction device and method for correcting a distance at a short distance through a plurality of reflection units.

In addition, embodiments are directed to providing a LiDAR correction device which allows a distance to be easily changed through a moving unit and a rotating unit and a plurality of devices to be arranged in the same space, and a method using the same.

In addition, embodiments are directed to providing a LiDAR distance correction device which allows evaluation (or correction) to be performed through all of the pixels due to having a diffusion unit and the like even when a height (e.g., a length in a third direction) of a space is small and of which a manufacturing cost is reduced because a size becomes small, and a method using the same.

The objects of embodiments are not limited thereto and may also include objects or effects that may be identified from the configurations or embodiments to be described below.

### [Technical Solution]

A light detection and ranging (LiDAR) correction device according to an embodiment includes a first reflection unit configured to reflect an optical signal emitted by an output unit of a LiDAR device, a second reflection unit configured to reflect the optical signal reflected from the first reflection unit, and a moving unit connected to the first reflection unit and the second reflection unit, wherein the moving unit moves the first reflection unit and the second reflection unit in a first direction in which the optical signal is emitted or in a second direction perpendicular to the first direction.

The LiDAR correction device may include a rotating unit disposed on the moving unit and connected to the first reflection unit and the second reflection unit.

The rotating unit may rotate at least one of the first reflection unit and the second reflection unit with respect to a third direction, and the third direction may be a direction perpendicular to the first direction and the second direction.

The moving unit may include a first moving member connected to the first reflection unit and a second moving member connected to the second reflection unit.

The rotating unit may include a first rotating unit connected to the first reflection unit and a second rotating unit connected to the second reflection unit.

The first reflection unit and the second reflection unit may be disposed in parallel.

The first reflection unit and the second reflection unit may be disposed at different distances from the output unit in the first direction.

A length between the first reflection unit and the output unit in the first direction may be greater than a length between the second reflection unit and the output unit in the first direction.

The second reflection unit may reflect the optical signal reflected from the first reflection unit to the first reflection unit, and the first reflection unit may reflect the optical signal reflected from the second reflection unit to a reception unit of the LiDAR device.

The second reflection unit may include a mirror or a target chart.

The LiDAR correction device may include a third reflection unit disposed to be spaced apart from the first reflection unit in the second direction.

A length between the third reflection unit and the output unit in the first direction may be equal to the length between the first reflection unit and the output unit in the first direction.

The third reflection unit may be disposed on the first moving member.

The first reflection unit and the third reflection unit may overlap each other in the second direction.

The LiDAR correction device may include a chart unit disposed to be spaced apart from the second reflection unit in the second direction.

The chart unit and the second reflection unit may be disposed at the same distance from the output unit in the first direction.

The second reflection unit may reflect the optical signal to the third reflection unit, the third reflection may reflect the optical signal to the chart unit, and the chart unit may reflect the optical signal to the third reflection unit.

The LiDAR correction device may include a diffusion unit disposed on a path of the optical signal output from the output unit or the optical signal received by a reception unit of the LiDAR device.

A light detection and ranging (LiDAR) correction method according to an embodiment may include adjusting locations or angles of a first reflection unit and a second reflection unit, emitting an optical signal from an output unit of a LiDAR device to the first reflection unit, and reflecting the optical signal in the order of the first reflection unit, the second reflection unit, and the first reflection unit and receiving, by a reception unit of the LiDAR device, the reflected optical signal, and the first reflection unit and the second reflection unit may be disposed in parallel.

The first reflection unit and the second reflection unit may be disposed to be spaced apart from each other in a first direction in which the optical signal is emitted.

A light detection and ranging (LiDAR) correction device according to an embodiment includes a first reflection unit configured to reflect an optical signal emitted by an output unit of a LiDAR device, and a second reflection unit configured to reflect the optical signal reflected from the first reflection unit, wherein the first reflection unit and the second reflection unit are disposed to have a predetermined angle with respect to a second direction perpendicular to a first direction in which the output unit emits the optical signal, and the first reflection unit and the second reflection unit may be disposed in parallel.

The first reflection unit and the second reflection unit of the LiDAR correction device according to the embodiment may be disposed at different distances from the output unit in the first direction.

The first reflection unit and the second reflection unit of the LiDAR correction device according to the embodiment may be disposed at different distances from the output unit in the first direction.

The second reflection unit of the LiDAR correction device according to the embodiment may reflect the optical signal reflected from the first reflection unit to the first reflection unit, and the first reflection unit may reflect the optical signal reflected from the second reflection unit to a reception unit of the LiDAR device.

The LiDAR correction device according to the embodiment may include a third reflection unit disposed parallel to the second direction, and a chart unit disposed to have a predetermined angle with respect to the second direction, wherein the third reflection unit and the first reflection unit may be disposed at the same distance from the output unit in the first direction, the chart unit and the second reflection unit may be disposed at the same distance from the output unit in the first direction, and the second reflection unit may be disposed parallel to the second direction.

The second reflection unit of the LiDAR correction device according to the embodiment may reflect the optical signal to the third reflection unit, the third reflection unit may reflect the optical signal to the chart unit, and the chart unit may reflect the optical signal to the third reflection unit.

The first reflection unit of the LiDAR correction device according to the embodiment may be disposed at a half distance of a minimum measurement distance of the LiDAR device in the first direction, and the second reflection unit and the output unit may be disposed at the same location in the second direction.

The first reflection unit and the third reflection unit of the LiDAR correction device according to the embodiment may be disposed at a quarter distance of the minimum measurement distance of the LiDAR device in the first direction, and the second reflection unit, the chart unit, and the output unit may be disposed at the same location in the second direction.

The LiDAR correction device according to the embodiment may include n (n is a positive integer) reflection units configured to reflect an optical signal, wherein an even-numbered reflection unit among the reflection units and the output unit may be disposed at the same location in a second direction perpendicular to a first direction in which an output unit of the LiDAR device emits the optical signal, an odd-numbered reflection unit among the reflection units may be disposed to be spaced apart from an even-numbered reflection unit among the reflection units in the first direction, the odd-numbered reflection unit and the even-numbered reflection unit may be disposed at the same location in the second direction, centers of the n reflection units may be disposed at a regular interval in the second direction, and a first reflection unit and an n^{th} reflection unit among the n reflection units may be disposed to have a predetermined angle with respect to the second direction and disposed in parallel.

The first reflection units, the n^{th} reflection units, and the second to (n-1)^{th} reflection units of the LiDAR correction device according to the embodiment may not be disposed in parallel.

The first reflection unit of the LiDAR correction device according to the embodiment may reflect the optical signal emitted by the output unit, and an i^{th} reflection unit among the n reflection units may reflect the optical signal to an (i-1)^{th} reflection unit or an (i+1)^{th} reflection unit (i is an integer of 1 or more and n or less).

The first reflection unit of the LiDAR correction device according to the embodiment may include a diffusion unit configured to reflect the optical signal reflected by the second reflection unit to the reception unit of the LiDAR device and diffuse the optical signal within an angle of view of the reception unit.

The diffusion unit of the LiDAR correction device according to the embodiment may be disposed on a path of the optical signal output from the output unit or the optical signal received by the reception unit.

A LiDAR correction method according to an embodiment may include emitting an optical signal from an output unit of a LiDAR device to a first reflection unit, reflecting, by the first reflection unit, the optical signal to a second reflection unit, reflecting, by the second reflection unit, the optical signal to the first reflection unit, reflecting, by the first reflection unit, the optical signal back to a reception unit of the LiDAR device, and receiving, by the reception unit, the reflected optical signal, in which the first reflection unit and the second reflection unit may be disposed in parallel.

The first reflection unit and the second reflection unit of the LiDAR correction method according to the embodiment may be disposed to have a predetermined angle with respect to a second direction perpendicular to a first direction in which the output unit emits the optical signal, the first reflection unit and the second reflection unit may be disposed at different distances from the output unit in the first direction, and centers of the first reflection unit and the second reflection unit may be disposed at different distances from the output unit in the second direction.

The LiDAR correction method according to the embodiment may include reflecting, by the second reflection unit, the optical signal to a third reflection unit, reflecting, by the third reflection unit, the optical signal to a chart unit, reflecting, by the chart unit, the optical signal back to the third reflection unit, and reflecting, by the third reflection unit, the optical signal back to the third reflection unit.

The third reflection unit of the LiDAR correction method according to the embodiment may be disposed parallel to the second direction, the chart unit may be disposed to have a predetermined angle with respect to the second direction, the third reflection unit and the first reflection unit may be disposed at the same distance from the output unit in the first direction, the chart unit and the second reflection unit may be disposed at the same distance from the output unit in the first direction, and the second reflection unit may be disposed parallel to the second direction.

The LiDAR correction method according to the embodiment may include diffusing, by a diffusion unit, the optical signal reflected from the first reflection unit, and the diffusion unit may be disposed at a location at which the diffused optical signal may include the entirety of an angle of view of the reception unit.

The diffusion unit of the LiDAR correction device according to the embodiment may be disposed on a path of the optical signal output from the output unit or the optical signal received by the reception unit.

### [Advantageous Effects]

According to embodiments of the present invention, it is possible to implement a LiDAR distance correction device and method that can correct a distance at a short distance through a plurality of reflection units.

According to embodiments, it is possible to implement the LiDAR correction device which it is possible to easily change a distance through a moving unit and a rotating unit and in which a plurality of devices can be arranged in the same space, and a method using the same.

According to embodiments, it is possible to implement the LiDAR distance correction device which can perform evaluation (or correction) through all pixels due to having a diffusion unit and the like even when a height (e.g., a length in a third direction) of a space is small and of which a manufacturing cost is reduced because a size becomes small, and a method using the same.

According to embodiments, the distance correction of the LiDAR device can be performed at a short distance.

In addition, a plurality of devices can be disposed in the same space while performing distance correction of the LiDAR device.

In addition, since the size of the LiDAR device correction device can be reduced, a manufacturing cost can be reduced.

Various and beneficial advantages and effects of the present invention are not limited to the above-described descriptions and will be more readily understood during a process of describing specific embodiments of the present invention.

### [Description of Drawings]

FIG. 1 is a configuration diagram of a LiDAR device according to an embodiment.
FIG. 2 is an image illustrating a minimum measurement distance of the LiDAR device according to the embodiment.
FIG. 3 is a conceptual diagram of a LiDAR correction device according to a first embodiment.
FIG. 4 is a conceptual diagram of a LiDAR correction device according to a second embodiment.
FIG. 5 is a conceptual diagram of a LiDAR correction device according to a third embodiment.
FIG. 6 is a conceptual diagram of a diffusion unit of the LiDAR correction device according to the embodiment.
FIG. 7 is a conceptual diagram of a LiDAR correction device according to a fourth embodiment.
FIG. 8 is a view for describing movement according to a movable unit in FIG. 7.
FIG. 9 is a conceptual diagram of a LiDAR correction device according to a fifth embodiment.
FIG. 10 is a conceptual diagram of a LiDAR correction device according to a sixth embodiment.
FIG. 11 is a flowchart of a LiDAR correction method according to an embodiment.
FIG. 12 is a flowchart of a LiDAR correction method according to another embodiment.

### [Modes of the Invention]

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as having meanings that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in a phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when a certain component is described as being formed or disposed "on (above)" or "below (under)" another component, the terms "on (above)" and "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

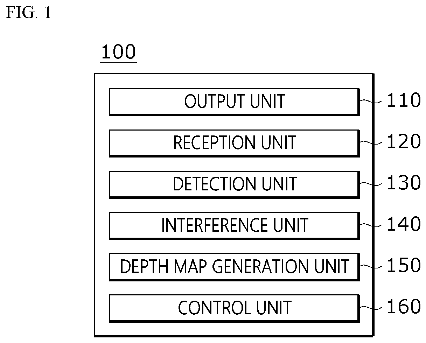

FIG. 1 is a configuration diagram of a light detection and ranging (LiDAR) device according to an embodiment.

A LiDAR device 100 according to the embodiment of the present invention may be an information generation device mounted on a vehicle to measure a distance between the vehicle and an object and generate distance information but is not limited thereto. The LiDAR device 100 according to the embodiment of the present invention may be a LiDAR camera. The LiDAR device 100 according to the embodiment of the present invention may extract a depth map using a time of flight (ToF) principle. In the present specification, the LiDAR device may be referred to as a depth map generation device or a camera device.

Referring to FIG. 1, the LiDAR device 100 according to the embodiment may include an output unit 110, a reception unit 120, a detection unit 130, an interference unit 140, a depth map generation unit 150, and a control unit 160. Only components of the LiDAR device 100 related to the present embodiments are illustrated. Accordingly, it is obvious to those skilled in the art that the LiDAR device 100 may further include other general components in addition to the components illustrated in FIG. 1.

The LiDAR device 100 may be a frequency modulated continuous wave (FMCW) LiDAR. In addition, the LiDAR device 100 may use a point scanning method, and thus the intensity of light received by the detection unit 130 may be small compared to other methods, for example, a flash method. Accordingly, an avalanche photo diode (APD) or a single photon avalanche diode (SPAD), which has high sensing sensitivity, may be adopted as the detection unit 130. A specific circuit configuration such as an analog front end (AFE), a time to digital converter (TDC), etc., may vary according to which light-receiving element among the APD or the SPAD is included in the detection unit 130.

The output unit 110 of the LiDAR device 100 according to the embodiment may output and transmit an optical signal.

The output unit 110 may include a light source, such as an edge light emitting laser, a vertical-cavity surface emitting laser (VCSEL), a distributed feedback laser, a light-emitting diode (LED), a super luminescent diode (SLD), etc. The output unit 110 may generate and emit light in a plurality of different wavelength bands. The output unit 110 may generate pulsed light or continuous light. The continuous light may be in the form of a sinusoid wave or a squared wave. By generating the output optical signal in the form of pulsed light or continuous light, the LiDAR device 100 may detect a time difference or phase difference between the output optical signal output from the output unit 110 and an input optical signal input to the reception unit 120 after being reflected from an object.

The reception unit 120 of the LiDAR device 100 according to the embodiment may receive an optical signal reflected back from the object.

The reception unit 120 may include an image sensor, a filter disposed on the image sensor, and a lens group disposed on the filter. The optical signal reflected from the object may pass through the lens group. An optical axis of the lens group may be aligned with an optical axis of the image sensor. The filter may be disposed between the lens group and the image sensor. The filter may be disposed on an optical path between the object and the image sensor. Light having a predetermined wavelength range may pass through the filter. Light in a specific wavelength band may pass through the filter. The filter may transmit light having a specific wavelength. For example, light in an infrared band may pass through the filter, and the filter may block light other than light in the infrared band. The image sensor may detect light. The image sensor may receive an optical signal. The image sensor may detect the optical signal and output the detected optical signal as an electrical signal. The image sensor may detect light having a wavelength corresponding to the wavelength of light output by the light source. For example, the image sensor may detect light in an infrared band. Here, the image sensor may correspond to the detection unit 130 of the LiDAR device 100.

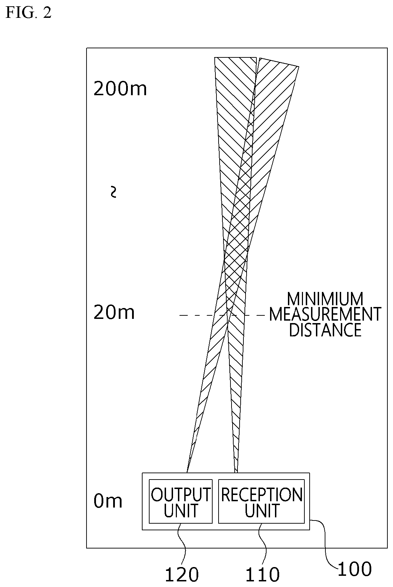

FIG. 2 is an image illustrating a minimum measurement distance of the LiDAR device according to the embodiment.

Referring to FIG. 2, the minimum measurement distance of the LiDAR device 100 may be determined by angles of view of the output unit 110 and the reception unit 120 of the LiDAR device 100.

The angles of view of the output unit 110 and the reception unit 120 refer to ranges in which the optical signal may be transmitted or received. In addition, since the output unit 110 and the reception unit 120 are disposed to be spaced a predetermined distance from each other, there is a minimum measurement distance at which the optical signal output from the output unit 110 may be reflected back to the reception unit 120 from the object. Even when the optical signal is reflected from the object located at a distance closer than the corresponding minimum measurement distance, the reception unit 120 cannot receive the corresponding optical signal, and thus it is impossible to collect information on the object.

In the case of a general LiDAR device 100, the minimum measurement distance may be determined at several tens of meters, and for example, when a measurable distance of the LiDAR device 100 is 200 meters, the minimum measurement distance of the LiDAR device 100 may be 20 meters.

The correctable minimum distance of the LiDAR correction device may be determined according to the minimum measurement distance of the LiDAR device 100. When an object is located within the minimum measurement distance, measurement of the LiDAR device 100 is impossible, and ultimately, distance correction using the distance measurement of the LiDAR device 100 may also be impossible.

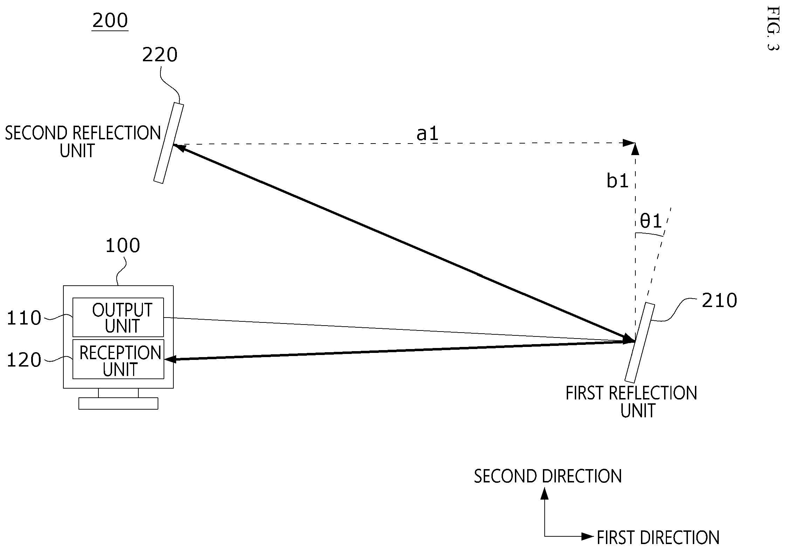

FIG. 3 is a conceptual diagram of a LiDAR correction device according to a first embodiment.

A correction method of the LiDAR correction device may be a method in which an optical signal, which is emitted to a target chart (or a reflective member, such as a mirror, etc.) by the output unit of the LiDAR device and reflected, is received by the reception unit to generate distance information, compare the generated distance information with an actual distance, and correct a distance thereof. Such a description may also be applied to all various embodiments below.

Referring to FIG. 3, a LiDAR correction device 200 according to the embodiment may include a first reflection unit 210 and a second reflection unit 220. In addition, the LiDAR correction device 200 may include a processor or the control unit as will be described below. In addition, the LiDAR correction device 200 may include a stage on which the LiDAR device 100 to be corrected or tested is mounted. The following description will be given based on the LiDAR device mounted in the LiDAR correction device.

The LiDAR correction device 200 according to the embodiment may include the first reflection unit 210 that reflects an optical signal emitted by the output unit 110 of the LiDAR device 100 and the second reflection unit 220 that reflects an optical signal reflected by the first reflection unit 210, in which the first reflection unit 210 and the second reflection unit 220 may be disposed to have a predetermined angle with respect to a second direction perpendicular to a first direction in which the output unit 110 emits an optical signal, and the first reflection unit 210 and the second reflection unit 220 may be disposed in parallel.

The first reflection unit 210 and the second reflection unit 220 may be reflective members or reflectors that reflect light. The first reflection unit 210 and the second reflection unit 220 according to the embodiment may be rectangular mirrors. However, the type of the reflection unit is not limited. In addition, the shape, size, or thickness of the reflection unit is not limited.

The output unit 110 of the LiDAR device 100 according to the embodiment may emit an optical signal toward the first reflection unit 210. The first reflection unit 210 may be disposed within a range of the angle of view in which the output unit 110 emits the optical signal. The first reflection unit 210 may reflect the optical signal emitted by the output unit toward the second reflection unit 220. The second reflection unit 220 may be disposed within a range of the angle of view of the optical signal reflected by the first reflection unit.

The first reflection unit 210 and the second reflection unit 220 may be disposed to have a predetermined angle with respect to the second direction perpendicular to the first direction in which the output unit 110 emits the optical signal. For example, the first reflection unit 210 and the second reflection unit 220 may be disposed to have angle θ₁ with respect to the second direction perpendicular to the first direction in which the output unit 110 emits the optical signal. The magnitude of the angle may vary according to the sizes of the first reflection unit 210 and the second reflection unit 220 but is not limited thereto.

A first reflection unit may first reflect the optical signal output from the output unit 110 of the LiDAR device 100. In the present embodiment, the first reflection unit may correspond to the first reflection unit 210. In addition, the first reflection unit may receive light from the same member and reflect the light. In the present embodiment, the last reflection unit may correspond to the second reflection unit 220. For example, the second reflection unit 220 may receive the optical signal from the first reflection unit 210 and reflect the light back to the first reflection unit 210. In the LiDAR correction device according to the present embodiment and the following other embodiments, the first reflection unit and the last reflection unit may be disposed in parallel. In the LiDAR correction device 300 according to the present embodiment, the first reflection unit 210 and the second reflection unit 220 may be disposed in parallel.

By arranging the first reflection unit 210 and the second reflection unit 220 in parallel, the optical signal reflected from the second reflection unit 220 may return to and reach the first reflection unit 210.

Centers of the first reflection unit 210 and the second reflection unit 220 of the LiDAR correction device 200 according to the embodiment may be disposed at different distances from the output unit 110 in the second direction. In addition, the first reflection unit 210 may not overlap the second reflection unit 220 in the second direction. Alternatively, the first reflection unit 210 may be disposed to be misaligned with the second reflection unit 220 in the second direction. In addition, the first reflection unit 210 may be disposed to be spaced apart from the second reflection unit 220 in the first direction and the second direction. Accordingly, an actual distance may be changed through a spacing distance between the first reflection unit and the last reflection unit. That is, the correction of the LiDAR device 100 may be performed.

Specifically, the first reflection unit 210 and the second reflection unit 220 of the LiDAR correction device 200 according to the embodiment may be disposed at different distances from the output unit in the first direction.

For example, the first reflection unit 210 according to the embodiment may be disposed at distance at from the output unit 110 in the first direction. In addition, the second reflection unit 220 according to the embodiment may be disposed at a distance other than a₁ from the output unit 110 in the first direction. For example, the second reflection unit 220 and the output unit 110 may be disposed at the same distance in the first direction. In this case, a distance between the first reflection unit 210 and the second reflection unit 220 in the first direction may be a₁. The centers of the first reflection unit 210 and the second reflection unit 220 of the LiDAR correction device 200 according to the embodiment may be disposed at different distances from the output unit 110 in the second direction.

For example, the second reflection unit 220 according to the embodiment may be disposed at distance b₁ from the output unit 110 in the second direction. In addition, the first reflection unit 210 according to the embodiment may be disposed at a distance other than b₁ from the output unit 110 in the second direction. For example, the first reflection unit 210 and the output unit 110 may be disposed at the same distance in the second direction. In this case, the distance between the first reflection unit 210 and the second reflection unit 220 in the second direction may be b₁.

The second reflection unit 220 of the LiDAR correction device 200 according to the embodiment may reflect the optical signal reflected from the first reflection unit 210 to the first reflection unit 210, and the first reflection unit 210 may reflect the optical signal reflected from the second reflection unit 220 to the reception unit 120 of the LiDAR device 100.

The second reflection unit 220 may reflect the optical signal reflected from the first reflection unit 210 back to the first reflection unit 210. In addition, the first reflection unit 210 may reflect the optical signal reflected from the second reflection unit 220 to the reception unit 120 of the LiDAR device 100.

Accordingly, the optical signal emitted from the output unit 110 according to the embodiment may be transmitted to the first reflection unit 210, reflected to the second reflection unit 220, reflected back to the first reflection unit 210, and received by the reception unit 120. The reception unit 120 receives the optical signal, and the depth map generation unit of the LiDAR device 100 generates a depth map of the optical signal. The LiDAR device is corrected by comparing detection distance data of the depth map with distance information of an actual target (the second reflection unit). In this case, the first reflection unit 210 may be disposed at a half distance of the minimum measurement distance of the LiDAR device 100, thereby maximally reducing the minimum measurement distance to a half thereof. As a result, it is possible to correct the LiDAR device at a short distance. For example, LiDAR correction devices 200, 300, and 400 according to the embodiment may not include the LiDAR device 100. The LiDAR device 100 may be disposed inside the LiDAR correction devices 200, 300, and 400 and used during the implementation of the LiDAR correction devices 200, 300, and 400, but the LiDAR device 100 does not correspond to an essential component of the LiDAR correction devices 200, 300, and 400.

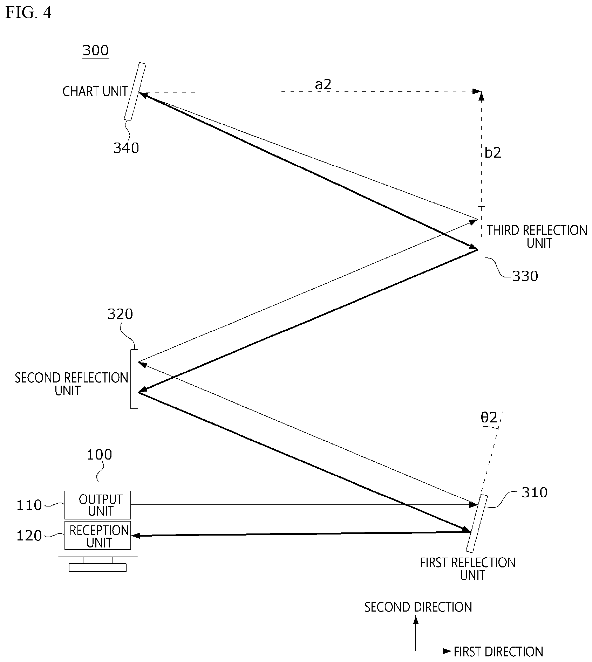

FIG. 4 is a conceptual diagram of a LiDAR correction device according to a second embodiment.

Referring to FIG. 4, the LiDAR correction device 300 according to the embodiment may further include a third reflection unit 330 disposed parallel to the second direction and a chart unit 340 disposed to have a predetermined angle with respect to the second direction, in which the third reflection unit 330 and the first reflection unit 310 may be disposed at the same distance in the first direction from the output unit 110, and the chart unit 340 and the second reflection unit 320 may be disposed at the same distance in the first direction from the output unit 110, and the second reflection unit 320 may be disposed parallel to the second direction. Hereinafter, the chart unit 340 is used interchangeably with a fourth reflection unit 340. Furthermore, in the present embodiment, the first reflection unit corresponds to the first reflection unit. In addition, the last reflection unit corresponds to the fourth reflection unit or the chart unit. The chart unit may be used interchangeably with the fourth reflection unit, a target unit, a target chart unit, etc.

The third reflection unit 330 and the fourth reflection unit 340 may be reflective members that reflect light, such as the first reflection unit 310 and the second reflection unit 320. The third reflection unit 330 and the fourth reflection unit 340 according to the embodiment may be rectangular mirrors. However, the type of the reflection unit is not limited. In addition, the shape, size, or thickness of the reflection unit is not limited.

The second reflection unit 320 according to the embodiment may reflect an optical signal to the third reflection unit 330, the third reflection unit 330 may reflect the optical signal to the chart unit 340, and the chart unit 340 may reflect the optical signal to the third reflection unit 330.

The second reflection unit 320 according to the embodiment may be disposed parallel to the second direction to reflect the optical signal reflected from the first reflection unit 310 to the third reflection unit 330. The third reflection unit 330 may be disposed parallel to the second direction to reflect the optical signal reflected from the second reflection unit 320 to the chart unit 340. The chart unit 340 may reflect the optical signal reflected from the third reflection unit 330 back to the third reflection unit 330. The third reflection unit 330 may reflect the optical signal back to the second reflection unit 320, the second reflection unit 320 may reflect the optical signal back to the first reflection unit 310, and the first reflection unit 310 may reflect the optical signal back to the reception unit 120.

The first reflection unit 310 and the chart unit 340 may be disposed in parallel. **In** this case, the first reflection unit 310 and the chart unit 340 may be disposed to be spaced apart from each other in the first direction. Furthermore, the first reflection unit 310 and the chart unit 340 may face each other and have different reflection directions or different reception directions with respect to the optical signal. The first reflection unit 310 receives the optical signal in a rightward direction in the drawing, and the chart unit 340 receives the optical signal in a leftward direction in the drawing. For example, reception directions of the optical signals of the first reflection unit 310 and the chart unit 340 may be opposite or symmetrical to the second direction.

**In** addition, the first reflection unit 310 and the chart unit 340 may be disposed to have a predetermined angle with respect to the second direction. For example, the first reflection unit 310 and the chart unit 340 may be disposed to have angle θ₂ with respect to the second direction perpendicular to the first direction in which the output unit 110 emits the optical signal. The magnitude of the angle may vary according to the sizes of the first reflection unit 310 and the chart unit 340 but is not limited thereto.

The third reflection unit 330 and the first reflection unit 310 may be disposed at the same distance in the first direction from the output unit 110. For example, the third reflection unit 330 and the first reflection unit 310 according to the embodiment may be disposed at distance a₂ from the output unit 110 in the first direction.

The chart unit 340 and the second reflection unit 320 may be disposed at the same distance in the first direction from the output unit 110. The second reflection unit 220 may be disposed at a distance other than a₁ from the output unit 110 in the first direction. For example, the chart unit 340 and the second reflection unit 320 may be disposed at the same distance from the output unit 110 in the first direction. In this case, the distance between the first reflection unit 310 and the chart unit 340 or the second reflection unit 320 in the first direction may be a₂.

In addition, reflection units other than the first reflection unit and the last reflection unit (the chart unit) among the plurality of reflection units may be disposed in parallel. For example, the reflection units other than the first reflection unit and the last reflection unit (the chart unit) among the plurality of reflection units may be disposed in parallel in the second direction. In addition, the reflection units other than the first reflection unit and the last reflection unit (the chart unit) among the plurality of reflection units may be disposed at different angles with respect to the second direction from the first reflection unit and the last reflection unit (the chart unit). This description may be applied to the LiDAR correction device according to other embodiments in the same manner.

Centers of the first reflection unit 310 to the third reflection unit 330 and the chart unit 340 according to the embodiment may be disposed at a regular interval at different distances from the output unit 110 in the second direction.

For example, the second reflection unit 220 according to the embodiment may be disposed at distance b₁ from the output unit 110 in the second direction. In addition, the first reflection unit 210 according to the embodiment may be disposed at a distance other than b₁ from the output unit 110 in the second direction. For example, the first reflection unit 210 and the output unit 110 may be disposed at the same distance in the second direction. In this case, a distance between the first reflection unit 210 and the second reflection unit 220 in the second direction may be b₁. In addition, a distance between the third reflection unit 330 and the second reflection unit 320 in the second direction according to the embodiment may be b₁. In addition, a distance between the chart unit 340 and the third reflection unit 330 in the second direction according to the embodiment may be b₁.

Accordingly, the optical signal according to the embodiment may be received by the reception unit 120 from the output unit 110 through the first reflection unit 310, the second reflection unit 320, the third reflection unit 330, the chart unit 340, the third reflection unit 330, the second reflection unit 320, and the first reflection unit 310. The reception unit 120 receives the optical signal, and the depth map generation unit of the LiDAR device 100 generates a depth map of the optical signal. The LiDAR device is corrected by comparing detection distance data of the depth map with distance information of an actual target (the chart unit). In this case, the first reflection unit 310 and the third reflection unit 330 may be disposed at a quarter distance of the minimum measurement distance of the LiDAR device 100, thereby maximally reducing the minimum measurement distance to a quarter thereof. As a result, it is possible to correct the LiDAR device at a short distance.

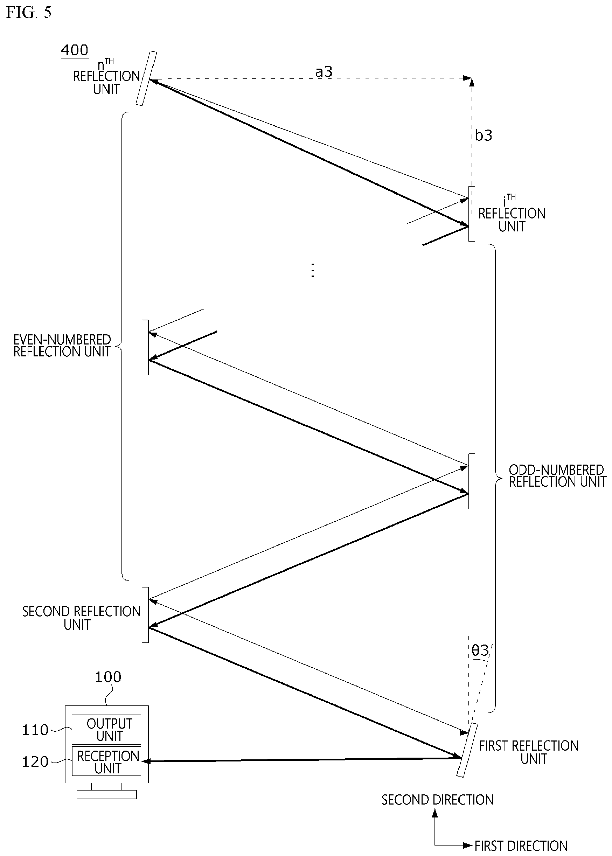

FIG. 5 is a conceptual diagram of a LiDAR correction device according to a third embodiment.

Referring to FIG. 5, the LiDAR correction device 400 according to the embodiment may include n (n is a positive integer) reflection units for reflecting an optical signal, in which an even-numbered reflection unit among the reflection units and the output unit 110 may be disposed at the same location in the second direction perpendicular to the first direction in which the output unit 110 of the LiDAR device 100 emits the optical signal, an odd-numbered reflection unit among the reflection units may be disposed to be spaced apart from the even-numbered reflection unit among the reflection units in the first direction, the odd-numbered reflection unit and the even-numbered reflection unit may be disposed at the same location in the second direction, centers of the n reflection units may be disposed at a regular interval in the second direction, and the first reflection unit and an n^{th} reflection unit among the n reflection units may be disposed to have a predetermined angle with respect to the second direction and disposed in parallel.

The odd-numbered reflection unit may be disposed to be spaced apart from the even-numbered reflection unit in the first direction, and the odd-numbered reflection unit and the even-numbered reflection unit may be disposed at the same location in the second direction. For example, the odd-numbered reflection unit according to the embodiment may be disposed at distance a₃ from the even-numbered reflection unit in the first direction. In addition, the centers of the n reflection units may be disposed at a regular interval in the second direction. For example, the centers of the n reflection units according to the embodiment may be disposed at distance b₃ in the second direction. In addition, the first reflection unit and the n^{th} reflection unit may be disposed to have a predetermined angle with respect to the second direction and disposed in parallel. For example, the first reflection unit and the n^{th} reflection unit according to the embodiment may be disposed to have angle θ₃ with respect to the second direction.

The first reflection unit, the n^{th} reflection unit, and second to (n-1)^{th} reflection units of the LiDAR correction device 400 according to the embodiment may not be disposed in parallel.

The first reflection unit of the LiDAR correction device 400 according to the embodiment may reflect the optical signal emitted by the output unit, and an i^{th} reflection unit among the n reflection units may reflect the optical signal to an (i-1)^{th} reflection unit or an (i+1)^{th} reflection unit (i is an integer of 1 or more and n or less).

The optical signal emitted from the output unit 110 according to the embodiment may be transmitted to the first reflection unit, reflected to the second reflection unit, reflected to the third reflection unit, reflected to the n^{th} reflection unit, reflected back to the first reflection unit, and received by the reception unit 120. The reception unit 120 receives the optical signal, and the depth map generation unit of the LiDAR device 100 generates a depth map of the optical signal. The LiDAR device is corrected by comparing detection distance data of the depth map with distance information of an actual target (the chart unit). In this case, the odd-numbered reflection unit may be disposed at a 1/n distance of the minimum measurement distance of the LiDAR device 100, thereby maximally reducing the minimum measurement distance to a 1/n thereof. As a result, it is possible to correct the LiDAR device at a short distance.

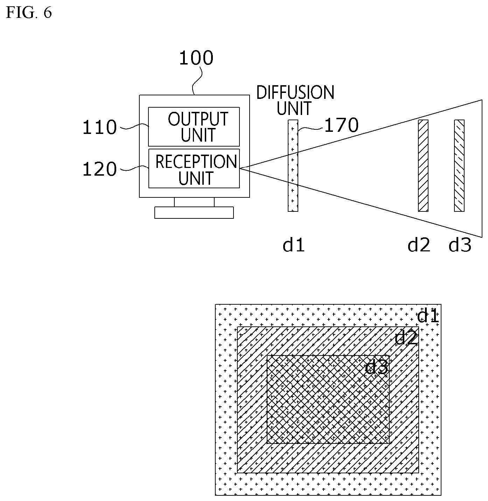

FIG. 6 is a conceptual diagram of a diffusion unit of the LiDAR correction device according to the embodiment.

Referring to FIG. 6, the first reflection unit of the LiDAR correction device according to the embodiment may reflect the optical signal reflected from the second reflection unit to the reception unit 120 of the LiDAR device 100, and the LiDAR correction device may include a diffusion unit 170 for diffusing the optical signal within the angle of view of the reception unit 120.

The diffusion unit 170 of the LiDAR correction device according to the embodiment may be disposed on a path of the optical signal output from the output unit 110 or the optical signal received by the reception unit 120.

The diffusion unit 170 may be a device or object installed in front of a light source to diffuse light. The diffusion unit 170 may be formed of a metal or plastic but is not limited thereto. The light may be diffused in a manner that increases the diffusion effect of the beam or reduces the intensity of the beam.

To perform distance correction of the LiDAR device 100, all pixels of the reception unit 120 need to receive an optical signal. To this end, a diffusion unit may be disposed in front of the reception unit 120 to diffuse the optical signal so that all pixels of the reception unit 120 receive the optical signal.

In addition, when a distance between the reception unit 120 and the diffusion unit 170 increases, the diffusion unit 170 may not fully diffuse the optical signal within the angle of view of the reception unit 120, and in this case, since correction is not performed properly, the reception unit 120 may be disposed close to the diffusion unit 170 so that the diffusion unit 170 diffuses the optical signal within the angle of view of the reception unit 120.

FIG. 6 illustrates an optical signal reception range of the reception unit 120 according to the location of the diffusion unit 170.

The diffusion unit 170 according to the embodiment may be disposed at location d1 in the first direction between the LiDAR device 100 and the first reflection unit. The diffusion unit 170 may be located as close as possible to the reception unit 120 of the LiDAR device 100 in the first direction between the LiDAR device 100 and the first reflection unit. The diffusion unit 170 may be located as far as possible from the first reflection unit in the first direction between the LiDAR device 100 and the first reflection unit.

The diffusion unit 170 according to the embodiment may be located at location d1 at which the optical signal received by the reception unit 120 is diffused so that the optical signal fills all pixels of the reception unit 120. When the diffusion unit 170 is disposed at location d1, the diffused optical signal may fill all pixels of the reception unit 120 within the entirety of the angle of view of the reception unit 120.

For example, when the diffusion unit 170 is disposed at location d3 or d2, the optical signal reception range of the reception unit 120 may be narrower than all pixels. On the other hand, when the diffusion unit 170 is disposed at location d1, the optical signal may be diffused and received by all pixels within the angle of view of the reception unit. Accordingly, when the diffusion unit 170 is disposed at location d1, the correction of the LiDAR device 100 can be effectively performed.

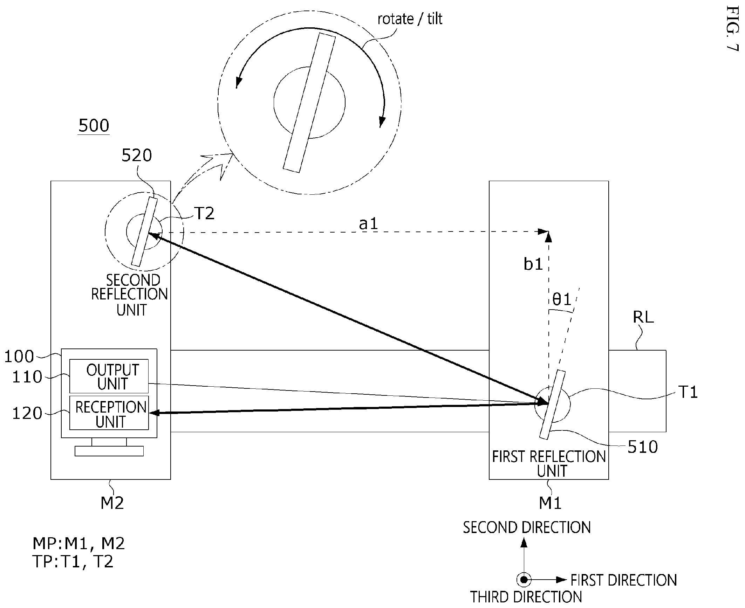

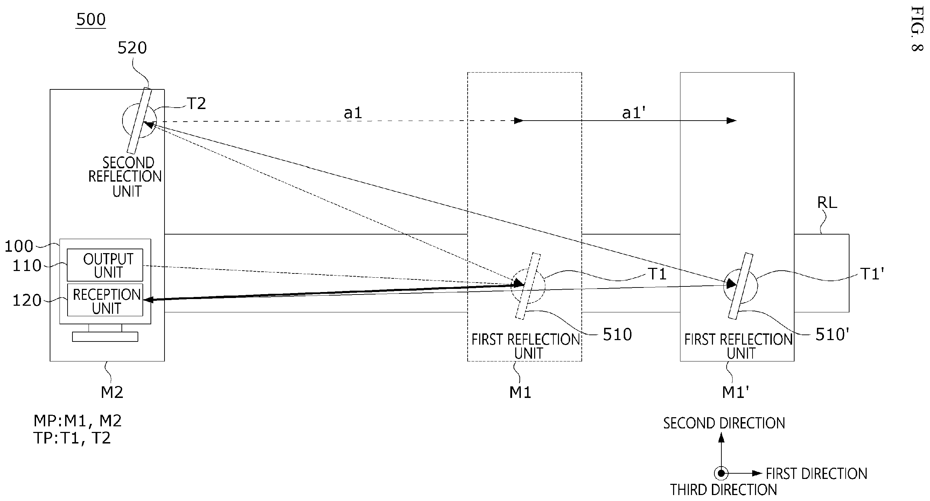

FIG. 7 is a conceptual diagram of a LiDAR correction device according to a fourth embodiment, and FIG. 8 is a view for describing movement according to the moving unit in FIG. 7.

Referring to FIG. 7, the LiDAR correction device 500 according to the embodiment may include a first reflection unit 510, a second reflection unit 520, the moving unit MP, and the rotating unit TP. Furthermore, the LiDAR correction device 500 may include a processor. The processor may control the driving of the moving unit MP and the rotating unit TP, which will be described below. Such a processor may be used interchangeably with the control unit.

The LiDAR correction device 500 according to the embodiment may include the first reflection unit 510 for reflecting the optical signal emitted by the output unit 110 of the LiDAR device 100 and the second reflection unit 520 for reflecting the optical signal reflected by the first reflection unit 510.

The first reflection unit 510 and the second reflection unit 520 may be disposed to have a predetermined angle with respect to the second direction perpendicular to the first direction in which the output unit 110 emits the optical signal, and the first reflection unit 510 and the second reflection unit 520 may be disposed in parallel. For example, the control unit may control the first reflection unit 510 and the second reflection unit 520 to be parallel to each other and rotated or tilted at the same angle. Alternatively, the control unit may rotate the first reflection unit and the last reflection unit (the chart unit) to have the same angle through the rotating unit TP.

The first reflection unit 510 and the second reflection unit 520 may be reflective members that reflect light. For example, the first reflection unit 510 and the second reflection unit 520 may include a mirror. The first reflection unit 510 and the second reflection unit 520 according to the embodiment may be rectangular mirrors. However, the type of the reflection unit is not limited. In addition, the shape, size, or thickness of the reflection unit is not limited.

The output unit 110 of the LiDAR device 100 according to the embodiment may emit an optical signal toward the first reflection unit 510. The first reflection unit 510 may be disposed within a range of the angle of view in which the output unit 110 emits the optical signal. The first reflection unit 510 may reflect the optical signal emitted by the output unit toward the second reflection unit 520. The second reflection unit 520 may be disposed within a range of the angle of view of the optical signal reflected by the first reflection unit.

The first reflection unit 510 and the second reflection unit 520 may be disposed to have a predetermined angle with respect to the second direction perpendicular to the first direction in which the output unit 110 emits the optical signal. For example, the first reflection unit 510 and the second reflection unit 520 may be disposed to have angle θ₁ with respect to the second direction perpendicular to the first direction in which the output unit 110 emits the optical signal. The magnitude of the angle may vary according to the sizes of the first reflection unit 510 and the second reflection unit 520 but is not limited thereto.

The first reflection unit 510 and the second reflection unit 520 may be disposed in parallel.

By arranging the first reflection unit 510 and the second reflection unit 520 in parallel, the optical signal reflected from the second reflection unit 520 may return to and reach the first reflection unit 510.

The first reflection unit 510 and the second reflection unit 520 of the LiDAR correction device 500 according to the embodiment may be disposed at different distances from the output unit in the first direction.

For example, the first reflection unit 510 according to the embodiment may be disposed at distance a₁ from the output unit 110 in the first direction. In addition, the second reflection unit 520 according to the embodiment may be disposed at a distance other than a₁ from the output unit 110 in the first direction. For example, the second reflection unit 520 and the output unit 110 may be disposed at the same distance in the first direction. In this case, a distance between the first reflection unit 510 and the second reflection unit 520 in the first direction may be a₁.

The centers of the first reflection unit 510 and the second reflection unit 520 of the LiDAR correction device 500 according to the embodiment may be disposed at different distances from the output unit 110 in the second direction.

For example, the second reflection unit 520 according to the embodiment may be disposed at distance b₁ from the output unit 110 in the second direction. In addition, the first reflection unit 510 according to the embodiment may be disposed at a distance other than b₁ from the output unit 110 in the second direction. For example, the first reflection unit 510 and the output unit 110 may be disposed at the same distance in the second direction. In this case, the distance between the first reflection unit 510 and the second reflection unit 520 in the second direction may be b₁.

The second reflection unit 520 of the LiDAR correction device 500 according to the embodiment may reflect the optical signal reflected from the first reflection unit 510 to the first reflection unit 510, and the first reflection unit 510 may reflect the optical signal reflected from the second reflection unit 520 to the reception unit 120 of the LiDAR device 100.

The second reflection unit 520 may reflect the optical signal reflected from the first reflection unit 510 back to the first reflection unit 510. In addition, the first reflection unit 510 may reflect the optical signal reflected from the second reflection unit 520 to the reception unit 120 of the LiDAR device 100.

Accordingly, the optical signal according to the embodiment may be received by the reception unit 120 from the output unit 110 through the first reflection unit 510, the second reflection unit 520, and the first reflection unit 510. The reception unit 120 receives the optical signal, and the depth map generation unit of the LiDAR device 100 generates a depth map of the optical signal. The LiDAR device is corrected by comparing detection distance data of the depth map with distance information of an actual target (the second reflection unit). In this case, the first reflection unit 510 may be disposed at a half distance of the minimum measurement distance of the LiDAR device 100, thereby maximally reducing the minimum measurement distance to a half thereof. As a result, it is possible to correct the LiDAR device at a short distance. In this way, the above description may be applied in the same manner with the exception of descriptions to be provided below.

The moving unit MP may be connected to the first reflection unit 510 and/or the second reflection unit 520. For example, the moving unit MP may be connected to at least one of the first reflection unit 510 and the second reflection unit 520. The moving unit MP may move the first reflection unit 510 and the second reflection unit 520 in the first direction or the second direction perpendicular to the first direction. For example, the moving unit MP may move the first reflection unit 510 and/or the second reflection unit 520 in the first direction. In addition, the moving unit MP may move the first reflection unit 510 and/or the second reflection unit 520 in the second direction. A first moving member M1 and a second moving member M2 may move in the first direction or the second direction along a rail RL. The detailed description thereof will be given below.

Additionally regarding FIG. 8, the first reflection unit 510 may be moved in the first direction by the moving unit MP. Accordingly, the first reflection unit 510 may be disposed at distance a₁' from the output unit 110 in the first direction. In addition, a₁' may be greater than a₁. Accordingly, a spacing distance between the first reflection unit 510 and the second reflection unit 520 in the first direction can increase. Accordingly, regarding the correction of the LiDAR device 100, the actual distance can easily vary. That is, for the correction of the LiDAR device 100, the actual distance can be easily changed by the movement of the first reflection unit 510 and the second reflection unit 520 through the moving unit MP. In this way, the correction device of the LiDAR device can reduce spatial restrictions or limitations. In addition, it is possible to easily miniaturize the LiDAR correction device.

Furthermore, as described above, the distance between the first reflection unit 510 and the second reflection unit 520 in the second direction may vary. Accordingly, the actual distance can be easily adjusted.

A rotating unit TP may rotate at least one of the first reflection unit 510 and the second reflection unit 520 with respect to a third direction. The third direction may be a direction perpendicular to the first direction and the second direction. This description may also be applied to other embodiments below in the same manner.

The rotating unit TP may be disposed on the moving unit MP. In addition, the rotating unit TP may be connected to the first reflection unit 510 and the second reflection unit 520. As described above, the rotating unit TP may rotate each reflection unit or the target (the target chart) with respect to the third direction to adjust a movement path of the optical signal according to the distance between the first reflection unit and the second reflection unit in the first direction or the second direction. That is, the optical signal can be accurately provided from the first reflection unit to the second reflection unit or accurately provided from the second reflection unit to the first reflection unit.

More specifically, the moving unit MP may include the first moving member M1 connected to the first reflection unit 510 and the second moving member M2 connected to the second reflection unit 520. Furthermore, the moving unit MP can include the rail RL for the movement of the first moving member M1 and the second moving member M2. The rail RL may extend in the first direction or the second direction. The rail RL may be provided as a plurality of rails. As illustrated, the rail RL may extend in the first direction. In addition, the first moving member M1 and the second moving member M2 may be located on the rail RL. Furthermore, at least one of the first moving member M1 and the second moving member M2 may move in the first direction and/or the second direction. That is, the at least one of the first moving member M1 and the second moving member M2 may move along the rail RL. Hereinafter, an example in which the first moving member M1 and/or the second moving member M2 move along the rail RL in the first direction will be described. However, as a modified example, the moving unit MP may include only the first moving member M1 and move only the first moving member M1 in the first direction to adjust the distance between the reflection units.

In addition, the rotating unit TP may include a first rotating unit T1 connected to the first reflection unit 510 and a second rotating unit T2 connected to the second reflection unit 520. The rotating unit TP may be connected to each reflection unit.

The first rotating unit T1 may rotate the first reflection unit 510 with respect to the third direction. According to a rotation, a predetermined angle of the first reflection unit 510 with respect to the second direction may be changed. The second rotating unit T2 may rotate the second reflection unit 520 with respect to the third direction. According to a rotation, a predetermined angle of the second reflection unit 520 with respect to the second direction may be changed.

The moving unit may be connected to each rotating unit and the reflection unit. Alternatively, the moving unit may be connected to a plurality of rotating units. For example, the odd-numbered reflection unit to be described below may be connected to the same moving unit (e.g., a first moving unit) and moved in the first direction or the second direction by the first moving unit. In addition, the even-numbered reflection unit may be connected to the same moving unit (e.g., the second moving unit) and moved in the first direction or the second direction by the second moving unit.

Furthermore, as described above, a length between the first reflection unit 510 and the output unit 110 in the first direction may be greater than a length between the second reflection unit 520 and the output unit 110 in the first direction. The second reflection unit 520 may be located closer to the output unit 110 (or the LiDAR device) than the first reflection unit 510.

When the LiDAR correction device 500 according to the embodiment has two reflection units, the second reflection unit 520 may include a mirror or a target chart. That is, in the LiDAR correction device according to various embodiments of the present disclosure, the reflection unit in which a target that has received the optical signal and a target that has transmitted the optical signal are the same may include a mirror or a target chart.

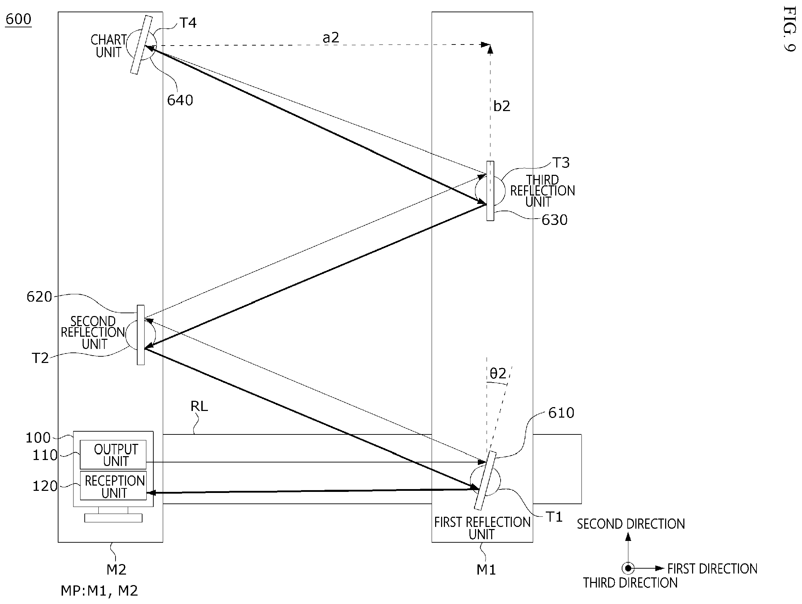

FIG. 9 is a conceptual diagram of a LiDAR correction device according to a fifth embodiment.

Referring to FIG. 9, a LiDAR correction device 600 according to a fifth embodiment may include a first reflection unit 610, a second reflection unit 620, a third reflection unit 630, the moving unit MP, and the rotating unit TP. In addition, the LiDAR correction device 600 may further include a target unit 640. For example, when the target unit 640 is not present, the third reflection unit 630 may serve as the target unit. That is, the optical signal reflected from the third reflection unit 630 may be provided to the second reflection unit 620. However, the following description will be given based on the optical signal reflected from the target unit 640 being provided to the third reflection unit 630.

Furthermore, the description of the first reflection unit 610, the second reflection unit 620, the moving unit MP, and the rotating unit TP with the exception of descriptions to be provided below may be applied in the same manner.

Specifically, the LiDAR correction device 600 according to the embodiment may include the first reflection unit 610 and the chart unit 640 (or the first reflection unit and the last reflection unit) disposed in parallel. Furthermore, the LiDAR correction device 600 according to the embodiment may further include an additional reflection unit. The LiDAR correction device 600 according to the embodiment may include the second reflection unit 620 and the third reflection unit 630 that are disposed between the first reflection unit and the last reflection unit. As described above, in the LiDAR correction device, the reflection units other than the first reflection unit and the last reflection unit (the chart unit) among the plurality of reflection units may be disposed in parallel. For example, the second reflection unit and the third reflection unit other than the first reflection unit and the last reflection unit (the chart unit) among the plurality of reflection units may be disposed in parallel in the second direction. In addition, as a modified example, the rotating unit may not be disposed on the second reflection unit and the third reflection unit. That is, the rotating unit may be connected only to the first reflection unit and the last reflection unit.

The LiDAR correction device 600 may further include the third reflection unit 630 disposed parallel to the second direction and the chart unit 640 disposed to have a predetermined angle with respect to the second direction.

As described above, the first reflection unit and the last reflection unit (the chart unit) may be disposed in parallel.

The third reflection unit 630 and the first reflection unit 610 may be disposed at the same distance in the first direction from the output unit 110, the chart unit 640 and the second reflection unit 620 may be disposed at the same distance in the first direction from the output unit 110, and the second reflection unit 620 may be disposed parallel to the second direction. The third reflection unit 630 may be disposed to be spaced apart from the first reflection unit 610 in the second direction. **In** addition, a length between the third reflection unit 630 and the output unit 110 in the first direction may be the same as a length between the first reflection unit 610 and the output unit 110 in the first direction. **In** addition, when a predetermined reflection unit moves in the second direction, the length between the third reflection unit 630 and the output unit 110 in the first direction may differ from the length between the first reflection unit 610 and the output unit 110 in the first direction.

In addition, at least a part of the third reflection unit 630 may overlap the first reflection unit 610 in the second direction. In addition, the chart unit 640 may be disposed to be spaced apart from the second reflection unit 620 in the second direction. The chart unit 640 may be disposed at a distance that is the same as or different from the second reflection unit in the first direction from the output unit 110. When the movement of each reflection unit in the first direction is independently performed, distances between the reflection units and the output unit 110 may be different.

The third reflection unit 630 and the fourth reflection unit 640 (or used interchangeably with the chart unit 640) may be reflective members that reflect light like the first reflection unit 610 and the second reflection unit 620. The third reflection unit 630 and the fourth reflection unit 640 according to the embodiment may be rectangular mirrors. However, the type of the reflection unit is not limited. In addition, the shape, size, or thickness of the reflection unit is not limited.

The second reflection unit 620 according to the embodiment may reflect an optical signal to the third reflection unit 630, the third reflection unit 630 may reflect the optical signal to the chart unit 640, and the chart unit 640 may reflect the optical signal to the third reflection unit 630.

The second reflection unit 620 according to the embodiment may be disposed parallel to the second direction to reflect the optical signal reflected from the first reflection unit 610 to the third reflection unit 630. The third reflection unit 630 may be disposed parallel to the second direction to reflect the optical signal reflected from the second reflection unit 620 to the chart unit 640. The chart unit 640 may reflect the optical signal reflected from the third reflection unit 630 back to the third reflection unit 630. The third reflection unit 630 may reflect the optical signal back to the second reflection unit 620, the second reflection unit 620 may reflect the optical signal back to the first reflection unit 610, and the first reflection unit 610 may reflect the optical signal back to the reception unit 120.

The first reflection unit 610 and the chart unit 640 may be disposed to have a predetermined angle with respect to the second direction. For example, the first reflection unit 610 and the chart unit 640 may be disposed to have angle θ₂ with the second direction perpendicular to the first direction in which the output unit 110 emits the optical signal. The magnitude of the angle may vary according to the sizes of the first reflection unit 610 and the chart unit 640 but is not limited thereto.

The third reflection unit 630 and the first reflection unit 610 may be disposed at the same distance in the first direction from the output unit 110. For example, the third reflection unit 630 and the first reflection unit 610 according to the embodiment may be disposed at the distance a₂ from the output unit 110 in the first direction.

The chart unit 640 and the second reflection unit 620 may be disposed at the same distance in the first direction from the output unit 110. The second reflection unit 620 may be disposed at a distance other than a₁ from the output unit 110 in the first direction. For example, the chart unit 640 and the second reflection unit 620 may be disposed at the same distance from the output unit 110 in the first direction. In this case, the distance between the first reflection unit 610 and the chart unit 640 or the second reflection unit 620 in the first direction may be a₂.

Centers of the first reflection unit 610 to the third reflection unit 630 and the chart unit 640 according to the embodiment may be disposed at a regular interval at different distances from the output unit 110 in the second direction.

For example, the second reflection unit 620 according to the embodiment may be disposed at distance b₁ from the output unit 110 in the second direction. In addition, the first reflection unit 610 according to the embodiment may be disposed at a distance other than b₁ from the output unit 110 in the second direction. For example, the first reflection unit 610 and the output unit 110 may be disposed at the same distance in the second direction. In this case, a distance between the first reflection unit 610 and the second reflection unit 620 in the second direction may be b₁. In addition, a distance between the third reflection unit 630 and the third reflection unit 620 in the second direction according to the embodiment may be b₁. In addition, a distance between the chart unit 640 and the third reflection unit 620 in the second direction according to the embodiment may be b₁.

Accordingly, the optical signal according to the embodiment may be received by the reception unit 120 from the output unit 110 through the first reflection unit 610, the second reflection unit 620, the third reflection unit 630, the chart unit 640, the third reflection unit 630, the second reflection unit 620, and the first reflection unit 610. The reception unit 120 receives the optical signal, and the depth map generation unit of the LiDAR device 100 generates a depth map of the optical signal. The LiDAR device is corrected by comparing detection distance data of the depth map with distance information of an actual target (the chart unit). In this case, the first reflection unit 610 and the third reflection unit 630 may be disposed at a quarter distance of the minimum measurement distance of the LiDAR device 100, thereby maximally reducing the minimum measurement distance to a quarter thereof. As a result, it is possible to correct the LiDAR device at a short distance.

In addition, the first reflection unit 610 and the third reflection unit 630 may be connected to the first moving member M1. The first reflection unit 610 and the third reflection unit 630 may be connected to the first moving member M₁. Accordingly, the first reflection unit 610 and the third reflection unit 630 may move integrally in the first direction. As a modified example, as described above, the first moving member M1 may include a 1-1 moving member and a 1-2 moving member. In addition, the first reflection unit 610 may be connected to the 1-1 moving member. In addition, the third reflection unit 630 may be connected to the 1-2 moving member. In addition, the 1-1 moving member and the 1-2 moving member may move independently of each other in the second direction. Accordingly, the distance between the first reflection unit 610 and the third reflection unit 630 in the second direction may vary.

In addition, the second reflection unit 620 and the target unit 640 can be connected to the second moving member M2. The second reflection unit 620 and the target unit 640 can be connected to the second moving member M2. Accordingly, the second reflection unit 620 and the target unit 640 may move integrally in the first direction. As a modified example, as described above, the second moving member M2 may include a 2-1 moving member and a 2-2 moving member. In addition, the first reflection unit 620 may be connected to the 2-1 moving member. In addition, the target unit 640 may be connected to the 2-2 moving member. In addition, the 2-1 moving member and the 2-2 moving member may move independently of each other in the second direction. Accordingly, the spacing distance between the second reflection unit 620 and the target unit 640 in the second direction may vary.

In addition, a plurality of reflection units and the chart unit may each be connected to the rotating unit. For example, the first reflection unit 610 may be connected to the first rotating unit T1. In addition, the first rotating unit T1 may rotate the first reflection unit 610 with respect to the third direction. In the present specification, the rotating unit may include various devices (e.g., a motor) for rotating the reflection unit with respect to the third direction.

For example, the second reflection unit 620 may be connected to the second rotating unit T2. In addition, the second rotating unit T2 may rotate the second reflection unit 620 with respect to the third direction. The third reflection unit 630 may be connected to the third rotating unit T3. In addition, the third rotating unit T3 may rotate the third reflection unit 630 with respect to the third direction. The chart unit 640 may be connected to the fourth rotating unit T4. In addition, the fourth rotating unit T4 may rotate the chart unit 640 with respect to the third direction.

In the present specification, each rotating unit (e.g., the first rotating unit to the fourth rotating unit) of the rotating units may rotate each connected reflection unit (or the chart unit) to have a predetermined angle with respect to the second direction. In this case, the reflection unit or the chart unit may be rotated to have the same angle with respect to the second direction by each rotating unit. For example, the first reflection unit and the chart unit may be rotated to have the same angle with respect to the second direction. In addition, the second reflection unit and the third reflection unit may be rotated parallel to the second direction or parallel to each other. Furthermore, in the present specification, the first reflection unit and the last reflection unit among the plurality of reflection units may have angles with respect to the second direction different from those of other reflection units (e.g., the second reflection unit and the third reflection unit). That is, the first reflection unit and the last reflection unit among the plurality of reflection units may not be parallel to the other reflection units (e.g., the second reflection unit and the third reflection unit).

In addition, each rotating unit may rotate the first reflection unit and the last reflection unit (or the chart unit) at the same angle unless there is an abnormality. For example, a length (or a distance) between the first reflection unit (or the third reflection unit) or the second reflection unit (or the chart unit) in the first direction may be changed by the moving unit MP. In this case, the rotating unit may rotate the first reflection unit and the fourth reflection unit (the chart unit) at the same angle. Furthermore, the second reflection unit and the third reflection unit may also be rotated at the same angle. However, as described above, the first reflection unit and the fourth reflection unit may not be parallel to the second reflection unit and the third reflection unit. In addition, the rotating direction provided by the rotating unit TP may also be the same. This may be applied in the same manner even when the distance between the reflection units in the second direction varies. For example, the distance between the reflection units in the second direction may vary. In this case, the rotating unit may rotate the reflection units at the same angle as described above. In addition, the rotating direction provided by the rotating unit TP may also be the same. Accordingly, each reflection unit or the chart unit may be disposed in parallel. This description may also be applied to both the LiDAR correction device according to the present embodiment and the LiDAR correction device according to other embodiments.

Furthermore, the LiDAR correction device according to the embodiment may further include the diffusion unit 170 (see FIG. 6) disposed on the path of the optical signal output from the output unit 110 or the optical signal received by the reception unit 120. This may be applied to all of the LiDAR correction devices according to various embodiments. In addition, regarding the description of the diffusion unit, the description provided in FIG. 6 may be applied in the same manner.

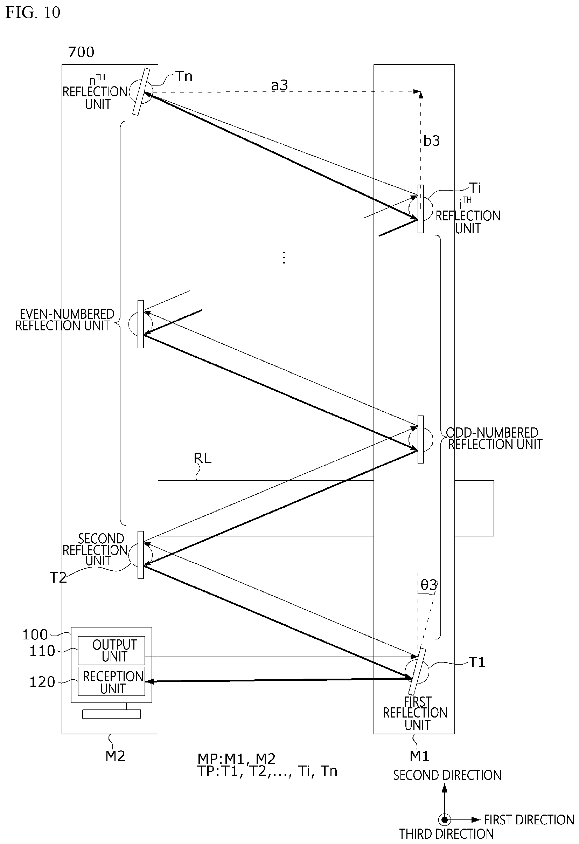

FIG. 10 is a conceptual diagram of a LiDAR correction device according to a sixth embodiment.

Referring to FIG. 10, a LiDAR correction device 700 according to the present embodiment may include a plurality of reflection units (n reflection units), the moving unit MP, and a rotating unit TP. Furthermore, the above description of the reflection unit, the moving unit MP, and the rotating unit TP may be applied in the same manner with the exception of the following description. For example, the LiDAR correction device 700 may include a plurality of rotating units (e.g., n rotating units) corresponding to the plurality of reflection units. In addition, the moving unit MP may include two moving members. Alternatively, the moving unit MP may include moving members corresponding to the number of reflection units. Alternatively, the moving unit MP may include one moving member. Alternatively, the moving unit MP may include a plurality of moving members. The number of moving units may be changed in a manner corresponding to the number of reflection units to be moved in the first direction or the second direction.

In addition, the LiDAR correction device 700 may include n (n is a positive integer) reflection units for reflecting an optical signal, in which an even-numbered reflection unit among the reflection units and the output unit 110 may be disposed at the same location in the second direction perpendicular to the first direction in which the output unit 110 of the LiDAR device 100 emits the optical signal, an odd-numbered reflection unit among the reflection units may be disposed to be spaced apart from the even-numbered reflection unit among the reflection units in the first direction, the odd-numbered reflection unit and the even-numbered reflection unit may be disposed at the same location in the second direction, centers of the n reflection units may be disposed at a regular interval in the second direction, and the first reflection unit and an n^{th} reflection unit among the n reflection units may be disposed to have a predetermined angle with respect to the second direction and disposed in parallel.

The odd-numbered reflection unit may be disposed to be spaced apart from the even-numbered reflection unit in the first direction, and the odd-numbered reflection unit and the even-numbered reflection unit may be disposed at the same location in the second direction. For example, the odd-numbered reflection unit according to the embodiment may be disposed at distance a₃ from the even-numbered reflection unit in the first direction. In addition, the centers of the n reflection units may be disposed at a regular interval in the second direction. For example, the centers of the n reflection units according to the embodiment may be disposed at distance b₃ in the second direction. In addition, the first reflection unit and the n^{th} reflection unit may be disposed to have a predetermined angle with respect to the second direction and disposed in parallel. For example, the first reflection unit and the n^{th} reflection unit according to the embodiment may be disposed to have an angle of θ₃ with respect to the second direction.

The first reflection unit, the n^{th} reflection unit, and second to (n-1)^{th} reflection units of the LiDAR correction device 700 according to the embodiment may not be disposed in parallel.

The first reflection unit of the LiDAR correction device 700 according to the embodiment may reflect the optical signal emitted by the output unit, and an i^{th} reflection unit among the n reflection units may reflect the optical signal to an (i-1)^{th} reflection unit or an (i+1)^{th} reflection unit (i is an integer of 1 or more and n or less).

The optical signal emitted from the output unit 110 according to the embodiment may be transmitted to the first reflection unit, reflected to the second reflection unit, reflected to the third reflection unit, reflected to the n^{th} reflection unit, reflected back to the first reflection unit, and received by the reception unit 120. The reception unit 120 receives the optical signal, and the depth map generation unit of the LiDAR device 100 generates a depth map of the optical signal. The LiDAR device is corrected by comparing detection distance data of the depth map with distance information of an actual target (the chart unit). In this case, the odd-numbered reflection unit may be disposed at a 1/n distance of the minimum measurement distance of the LiDAR device 100, thereby maximally reducing the minimum measurement distance to a 1/n thereof. As a result, it is possible to correct the LiDAR device at a short distance.

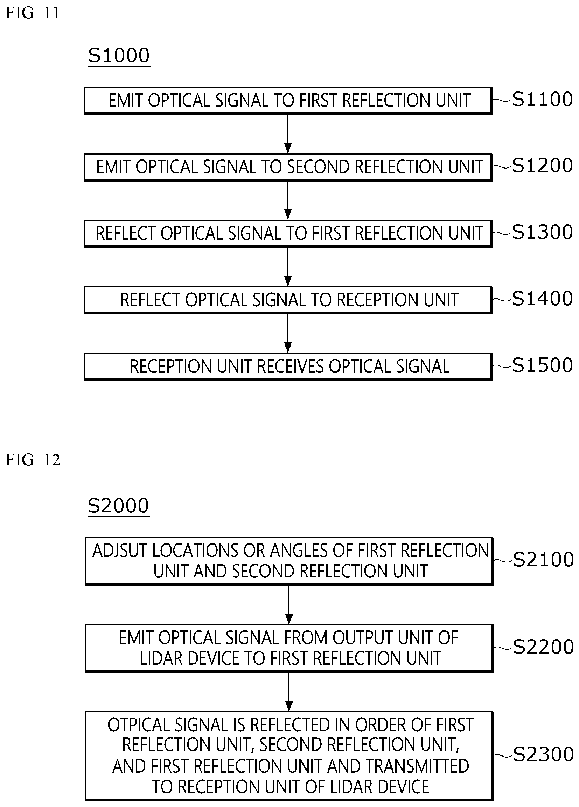

FIG. 11 is a flowchart of a LiDAR correction method according to an embodiment.

Referring to FIG. 11, a LiDAR correction method S1000 according to the embodiment includes an operation S1100 of emitting an optical signal from an output unit of a LiDAR device to a first reflection unit, an operation S1200 of reflecting, by the first reflection unit, the optical signal to a second reflection unit, an operation S1300 of reflecting, by the second reflection unit, the optical signal to the first reflection unit, an operation S1400 of reflecting, by the first reflection unit, the optical signal back to a reception unit of the LiDAR device, and an operation S1500 of receiving, by the reception unit, the reflected optical signal, in which the first reflection unit and the second reflection unit may be disposed in parallel.

The first reflection unit and the second reflection unit of the LiDAR correction method S1000 according to the embodiment may be disposed to have a predetermined angle with respect to a second direction perpendicular to a first direction in which the output unit emits the optical signal, the first reflection unit and the second reflection unit may be disposed at different distances from the output unit in the first direction, and centers of the first reflection unit and the second reflection unit may be disposed at different distances from the output unit in the second direction.

The LiDAR correction method S1000 according to the embodiment may include an operation of reflecting, by the second reflection unit, the optical signal to a third reflection unit, an operation of reflecting, by the third reflection unit, the optical signal to a chart unit, an operation of reflecting, by the chart unit, the optical signal back to the third reflection unit, and an operation of reflecting, by the third reflection unit, the optical signal back to the third reflection unit.

The third reflection unit of the LiDAR correction method S1000 according to the embodiment may be disposed parallel to the second direction, the chart unit may be disposed to have a predetermined angle with respect to the second direction, the third reflection unit and the first reflection unit may be disposed at the same distance from the output unit in the first direction, the chart unit and the second reflection unit may be disposed at the same distance from the output unit in the first direction, and the second reflection unit may be disposed parallel to the second direction.

The LiDAR correction method S1000 according to the embodiment may include an operation of diffusing, by a diffusion unit, the optical signal reflected from the first reflection unit, and the diffusion unit may be disposed at a location at which the diffused optical signal may include the entirety of an angle of view of the reception unit.

The diffusion unit of the LiDAR correction method S1000 according to the embodiment may be disposed on a path of the optical signal output from the output unit or the optical signal received by the reception unit.

FIG. 12 is a flowchart of a LiDAR correction method according to another embodiment.

A LiDAR correction method S2000 according to another embodiment may include an operation S2100 of adjusting locations or angles of a first reflection unit and a second reflection unit, an operation S2200 of emitting an optical signal from an output unit of a LiDAR device to the first reflection unit, and an operation S2300 of reflecting the optical signal in the order of the first reflection unit, the second reflection unit, and the first reflection unit and receiving, by a reception unit of the LiDAR device, the reflected optical signal.

First, the locations or angles of the first reflection unit and the second reflection unit may be adjusted. The location of the first reflection unit and/or the second reflection unit may be adjusted by the moving unit. At this time, the LiDAR correction device may adjust the locations of the first and second reflection units through the moving unit using a processor. In addition, the LiDAR correction device may rotate the first and second reflection units by the rotating unit using the processor.

Thereafter, the optical signal may be emitted from an output unit of the LiDAR correction device to the first reflection unit (S2200), and the optical signal may be reflected in the order of the first reflection unit, the second reflection unit, and the first reflection unit and received by the reception unit of the LiDAR device (S2300). The description provided in the operation S1100 may be applied to the operation S2200 in the same manner. Furthermore, the descriptions provided in the operations S1200, S1300, S1400, and S1500 may be applied to the operation S2300 in which the optical signal is received by the reception unit of the LiDAR device through a plurality of reflection units in the same manner.

Furthermore, as described above, the first reflection unit and the second reflection unit may be disposed in parallel, and the description of the LiDAR correction device according to various embodiments may be applied to the description of other components in the same manner.

The correction method according to the disclosed embodiment may be implemented in the form of program commands that may be performed through various computer devices and recorded on a computer-readable medium. In addition, the embodiments of the present disclosure may constitute a computer-readable recording medium on which one or more programs including commands that execute a wireless communication method are recorded.

In addition, the computer-readable medium may include program commands, data files, data structures, or the like alone or in combination. The program commands recorded on the medium may be specially designed and constructed for the present disclosure or may be known and available to those skilled in the art of computer software. Examples of the computer-readable recording medium include magnetic media such as a hard disk, a floppy disk, and a magnetic tape, optical media such as a compact disc read only memory (CD-ROM) and a digital video disk (DVD), and magneto-optical media such as a floptical disk, and hardware devices specifically configured to store and execute program commands, such as a read only memory (ROM), a random access memory (RAM), and a flash memory. Examples of the program commands include not only a machine language code such as that produced by a compiler, but also a high-level language code that may be executed by a computer using an interpreter or the like.

Here, a device-readable storage medium may be provided in the form of a non-transitory storage medium. Here, "non-transitory" is a tangible device, and only means that a signal (e.g., electromagnetic waves) is not included, and this term does not distinguish between cases in which data is stored semi-permanently and temporarily in the storage medium. For example, a "non-transitory storage medium" may include a buffer in which data is temporarily stored.

According to one embodiment, the correction method according to various embodiments disclosed herein may be provided by being included in a computer program product. The computer program product may be traded as a product. The computer program product may be distributed in the form of a device-readable storage medium (e.g., CD-ROM) or distributed online (e.g., downloading or uploading) via an application store (e.g., Play Store^{™}) or directly between two user devices (e.g., smartphones). In the case of the online distribution, at least a part of the computer program product (e.g., a downloadable app) may be at least temporarily stored or temporarily generated in a device-readable storage medium such as a memory of a server of a manufacturer, a server of an application store, or a relay server.

Specifically, the computer program product may be implemented by including a recording medium in which a program that performs the correction method according to the disclosed embodiment is stored.

The term "unit" used in the present embodiment means a software or hardware component such as field programmable gate array (FPGA) or an application specific integrated circuit (ASIC), and the "unit" performs certain roles. However, the "unit" is not limited to software or hardware. The "unit" may be disposed in an addressable storage medium and configured to reproduce one or more processors. Accordingly, as an example, the "unit" includes components such as software components, object-oriented software components, class components, and task components, processes, functions, attributes, procedures, subroutines, segments of program code, drivers, firmware, microcode, circuits, data, database, data structures, tables, arrays, and variables. Functions provided in the components and "units" may be combined into a smaller number of components and "units" or separated into additional components and "units." Additionally, the components and "units" may be implemented to reproduce one or more CPUs in a device or a security multimedia card.

Although embodiments have been mainly described above, these embodiments are only illustrative and do not limit the present invention, and those skilled in the art to which the present invention pertains can know that various modifications and applications that are not exemplified above are possible without departing from the essential characteristics of the embodiments. For example, each component specifically shown in the embodiments may be implemented by modification thereof. **In** addition, differences related to these modifications and applications should be construed as being included in the scope of the present invention defined in the appended claims.

## Claims

1. A light detection and ranging (LiDAR) correction device comprising:
a first reflection unit configured to reflect an optical signal emitted by an output unit of a LiDAR device;
a second reflection unit configured to reflect the optical signal reflected from the first reflection unit; and
a moving unit connected to the first reflection unit and the second reflection unit,
wherein the moving unit moves the first reflection unit and the second reflection unit in a first direction in which the optical signal is emitted or in a second direction perpendicular to the first direction.

2. The LiDAR correction device of claim 1, comprising a rotating unit disposed on the moving unit and connected to the first reflection unit and the second reflection unit.

3. The LiDAR correction device of claim 2, wherein the rotating unit rotates at least one of the first reflection unit and the second reflection unit with respect to a third direction, and
the third direction is a direction perpendicular to the first direction and the second direction.

4. The LiDAR correction device of claim 2, wherein the moving unit includes:
a first moving member connected to the first reflection unit; and
a second moving member connected to the second reflection unit.

5. The LiDAR correction device of claim 2, wherein the rotating unit includes:
a first rotating unit connected to the first reflection unit; and
a second rotating unit connected to the second reflection unit.

6. The LiDAR correction device of claim 1, wherein the first reflection unit and the second reflection unit are disposed in parallel.

7. The LiDAR correction device of claim 6, wherein the first reflection unit and the second reflection unit are disposed at different distances from the output unit in the first direction.

8. The LiDAR correction device of claim 1, wherein a length between the first reflection unit and the output unit in the first direction is greater than a length between the second reflection unit and the output unit in the first direction.

9. The LiDAR correction device of claim 1, wherein the second reflection unit reflects the optical signal reflected from the first reflection unit to the first reflection unit, and
the first reflection unit reflects the optical signal reflected from the second reflection unit to a reception unit of the LiDAR device.

10. The LiDAR correction device of claim 1, wherein the second reflection unit includes a mirror or a target chart.
